**Europäisches Patentamt**

(19) **European Patent Office**

**Office européen des brevets**

(11) Numéro de publication: **0 122 832**
**A1**

(12) ## DEMANDE DE BREVET EUROPEEN

(21) Numéro de dépôt: **84400529.8**

(22) Date de dépôt: **14.03.84**

(51) Int. Cl.³: **B 05 C 17/02**
**F 16 K 21/04**

(30) Priorité: **14.03.83 FR 8304131**

(43) Date de publication de la demande:
**24.10.84 Bulletin 84/43**

(84) Etats contractants désignés:
**AT BE CH DE GB IT LI LU NL SE**

(71) Demandeur: **Copin, Bernard**
**18, Boulevard Hardy**
**F-93370 Montfermeil(FR)**

(71) Demandeur: **Brouard, Jacky**
**53, Avenue J.F. Kennedy**
**F-35401 Saint Malo(FR)**

(72) Inventeur: **Copin, Bernard**
**18, Boulevard Hardy**
**F-93370 Montfermeil(FR)**

(74) Mandataire: **Peuscet, Jacques**
**3, Square de Maubeuge**
**F-75009 Paris(FR)**

(54) **Rouleau applicateur et ensemble d'application de liquide comprenant un tel rouleau.**

(57) Le rouleau applicateur comprend une rampe (28) d'arrosage du manchon (15), monté libre en rotation autour de l'arbre (17) d'une monture (16). La rampe (28) est maintenue par une conduite d'alimentation (27) rigide et coudée, à une faible distance au-dessus du manchon (15), cette conduite (27) étant solidarisée, d'une part avec le manche (21) et, d'autre part, avec la rampe d'arrosage (28). Une soupape d'alimentation (33) actionnée par une poignée (46), est montée sur une canalisation d'alimentation logée dans le manche (21).

FIG. 2

EP 0 122 832 A1

Croydon Printing Company Ltd.

ROULEAU APPLICATEUR ET ENSEMBLE D'APPLICATION DE LIQUIDE
COMPRENANT UN TEL ROULEAU.

L'invention concerne un rouleau applicateur, destiné à l'application sur une surface d'un liquide tel qu'une peinture, ledit rouleau étant du genre de ceux qui comprennent : un manchon libre en rotation autour de l'arbre d'une monture ; un manche relié à l'arbre et s'étendant sensiblement perpendiculairement à celui-ci ; une rampe d'arrosage du manchon disposée sensiblement parallèlement à l'arbre et s'étendant sensiblement sur toute la longueur du manchon, à une faible distance en regard de ce dernier, la rampe d'arrosage étant alimentée en liquide sous pression, à partir d'une source d'alimentation en liquide pressurisé, par un tuyau de raccordement, une canalisation d'alimentation portée par le manche, canalisation dans laquelle est montée une soupape d'alimentation, et une conduite d'alimentation.

Un rouleau applicateur de ce type est montré, par exemple, par FR-A-2 198 422. La conduite de distribution comporte un certain nombre d'orifices de sortie munis de nipples à tuyaux flexibles, un morceau de tuyau souple étant enfoncé par-dessus chaque nipple. La longueur des morceaux de tuyaux flexibles est telle qu'ils sont déviés et coudés par la surface extérieure du corps de rouleau. La présence de tels morceaux de tuyaux flexibles conduit à des difficultés d'entretien et à des risques de décrochage de ces tuyaux flexibles par rapport aux nipples. En outre, le basculement des morceaux de tuyaux souples, lors de l'inversion du sens de rotation du corps de rouleau peut provoquer des projections indésirables de peinture. De plus , si l'on souhaite utiliser, en fonction de la nature des travaux à effectuer, un corps de rouleau dont la longueur, suivant l'axe, est différente de celle utilisée précédemment, l'adaptation de la conduite de distribution à ce rouleau de longueur différente n'est pas des plus simples.

Le document CH-B-427 587 montre un rouleau applicateur comportant un distributeur constitué par un tube percé de trous en regard du manchon ; ces trous peuvent être équipés de petits tubes souples qui présentent les inconvénients d'entretien évoqués précédemment. L'adaptation d'un tel appareil à des manchons roulants ayant des longueurs différentes n'apparaît pas comme étant des plus simples. En outre, le robinet servant à commander le débit de peinture, et constituant en quelque sorte une soupape d'alimentation, n'est pas monté dans le manche du rouleau, mais à l'extrémité avant de ce manche de telle sorte le levier de commande de ce robinet est situé dans une position qui n'est pas favorable pour son actionnement par un utilisateur tenant le rouleau d'une main par la poignée.

L'invention a pour but, surtout, de fournir un rouleau applicateur qui ne présente plus, ou à un degré moindre, les inconvénients évoqués ci-dessus, et qui, notamment, permet d'améliorer l'arrosage du manchon, en réduisant au minimum les risques de projection indésirables de peinture, et de rendre plus facile et plus rapide l'adaptation du rouleau à des manchons de longueurs différentes. On souhaite, en outre, que le maniement et l'entretien du rouleau applicateur soient simples et efficaces.

Selon l'invention, un rouleau applicateur du genre défini précédemment est caractérisé par le fait que la conduite d'alimentation est rigide et coudée et maintient la rampe d'arrosage à une faible distance au-dessus du manchon, cette conduite étant solidarisée, d'une part, avec le manche et, d'autre part, avec la rampe d'arrosage.

Le manchon et la rampe sont ainsi supportés, à partir du manche du rouleau, de manière indépendante ce qui, en particulier, facilitera les opérations d'adaptation à des longueurs de manchon différentes.

En outre, la rampe étant située au-dessus du manchon, les risques de projections indésirables de peinture, lors de l'arrosage, sont réduits.

Par l'expression "au-dessus", il faut comprendre que la rampe est située, angulairement, à environ 90° par rapport au plan passant par l'axe du manchon et parallèle ou passant par l'axe du manche du rouleau. De préférence, la rampe est située dans une zone angulaire comprise entre environ 90° et 135° par rapport à une direction partant du centre du manchon et dirigée vers le manche du rouleau.

Avantageusement, la soupape d'alimentation comprend un corps de soupape porté par le manche, cette soupape étant actionnée par une poignée articulée sur le manche. La poignée est de préférence articulée vers l'extrémité avant du manche et s'étend vers l'arrière, parallèlement au manche. Cette poignée peut être prévue au-dessous ou, avantageusement, au-dessus du manche.

La soupape d'alimentation comprend un obturateur monté coulissant dans un corps de soupape porté par le manche, ledit obturateur étant appliqué contre un siège du corps de soupape par des moyens élastiques, à l'encontre desquels l'obturateur est soulevé de son siège et déplacé lorsque l'utilisateur commande le pivotement de la poignée par rapport au manche.

La canalisation d'alimentation peut comprendre une partie amont et une partie aval par lesquelles cette canalisation est respectivement raccordée à la source d'alimentation et à la conduite d'alimentation de la rampe, ces deux parties débouchant toutes deux dans un passage transversal du manche dans lequel est logé le corps de soupape, ledit corps présentant un orifice d'entrée et un orifice de sortie qui débouchent, de part et d'autre du siège du corps de soupape, dans un logement interne à ce dernier dans lequel est monté l'obturateur, lesdits orifices d'entrée et de sortie mettant le logement en communication respectivement avec les parties amont et aval de la canalisation d'alimentation.

L'obturateur peut comprendre deux portées d'extrémité cylindrique, de section circulaire et de diamètre différent, montées chacune coulissante avec étanchéité dans l'un de deux alésages de diamètre correspondant débouchant l'un dans l'autre et délimitant le logement interne du corps de soupape, la portée cylindrique de plus grand diamètre étant raccordée à une tige centrale qui la relie à l'autre
portée cylindrique, grâce à une portée conique qui, en position d'interruption de l'alimentation par l'obturateur, est
appliquée contre le siège de soupape, délimité sur l'épaulement selon lequel se raccordent les deux alésages, par un
ressort prenant appui, d'une part, sur la portée cylindrique
de plus grand diamètre et, d'autre part, contre un bouchon
de fermeture de l'alésage de plus grand diamètre, tandis que
la portée de plus grand diamètre obture l'orifice d'entrée
du corps, le pivotement de la poignée en position d'alimentation provoquant le coulissement de la portée cylindrique
de plus petit diamètre en direction de l'épaulement afin de
soulever la portée conique du siège de soupape et de dégager
l'orifice d'entrée, l'orifice de sortie restant toujours
dégagé.

Les parties aval et amont de la canalisation d'alimentation peuvent s'étendre entièrement dans le manche et
déboucher dans les faces d'extrémité du manche respectivement
tournée vers le manche et opposée au manchon par l'intermédiaire d'alésages destinés à recevoir des raccords qui les
relient respectivement à la conduite d'alimentation de la
rampe et au tuyau de raccordement du rouleau.

La rampe d'arrosage comporte des gicleurs interchangeables. Le rouleau comprend au moins deux jeux de gicleurs interchangeables. La conduite d'alimentation arrive
dans la partie centrale de la rampe ; avantageusement, le centre du premier gicleur situé de part et d'autre de l'axe de
la conduite d'alimentation au niveau de son raccordement avec
la rampe, se trouve à une distance d'au moins 7 mm de cet
axe, ce qui permet d'éviter un débit trop important de peinture à travers ce premier gicleur.

La poignée de commande peut être montée pivotante
par deux pattes latérales avant autour d'un axe parallèle à
l'arbre autour duquel le manchon peut tourner.

Grâce aux pertes de charge au passage dans le man-

5

che et dans la soupape d'alimentation, la pression qui règne en aval, pour l'alimentation de la rampe, est ramenée à une valeur relative convenable qui peut être inférieure à 1 bar pour une peinture fluide et qui peut aller jusqu'à 10 bars pour les peintures ou des enduits visqueux, alors que la pression régnant en amont peut atteindre plusieurs centaines de bars.

Le rouleau applicateur conforme à l'invention est d'une manipulation aisée en raison de son encombrement limité, tout en permettant une prise en main convenable, favorable à une bonne position pour l'application du revêtement liquide sur un mur vertical comme sur un plafond ou sur un sol, ou même sur une paroi inclinée. Le rouleau peut être maintenu près de la surface à revêtir alors que l'utilisateur effectue des mouvements d'une grande amplitude.

L'invention a également pour objet un ensemble destiné à l'application d'un liquide sur une surface, comprenant au moins un rouleau applicateur tel que défini précédemment, cet ensemble étant caractérisé par le fait qu'il comprend au moins un organe de distribution auquel au moins deux rouleaux applicateurs sont destinés à être raccordés par leur tuyau de raccordement respectif et au moins un tuyau d'alimentation générale destiné à raccorder l'organe de distribution à l'organe de pressurisation.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui ne sont nullement limitatifs.

La figure 1, de ces dessins, représente schématiquement des équipements qui sont associés à trois rouleaux applicateurs au sein d'un ensemble permettant de peindre les murs extérieurs de bâtiments sur des chantiers nécessitant un échafaudage ;

La figure 2 est une vue en perspective d'un rouleau applicateur qui peut être associé aux équipements de la figure 1 ;

La figure 3 est une vue en coupe longitudinale du rouleau de la figure 1, selon la ligne de coupe III-III de la figure 5, cette coupe représentant la poignée de commande et la soupape d'alimentation en position d'interruption de l'alimentation ;

La figure 4 est une vue en coupe partielle analogue à la figure 3, représentant la poignée de commande et la soupape d'alimentation en position d'alimentation ;

Les figures 5 et 6 sont des vues en coupe transversale selon V-V et VI-VI respectivement, des figures 3 et 4 ;

La figure 7 est une vue en plan de la rampe d'arrosage, du côté où se trouvent les gicleurs qui l'équipent ;

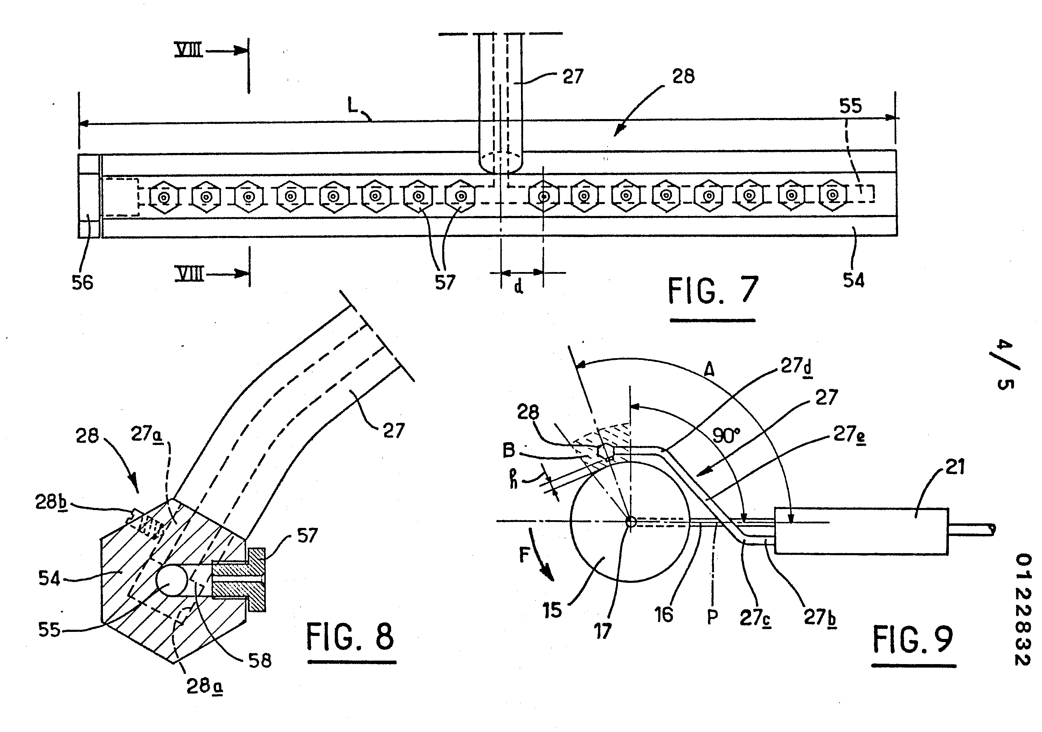

Le figure 8 est une vue en coupe transversale de la rampe d'arrosage selon VIII-VIII figure 7 ;

La figure 9 est une vue schématique de côté du rouleau applicateur ;

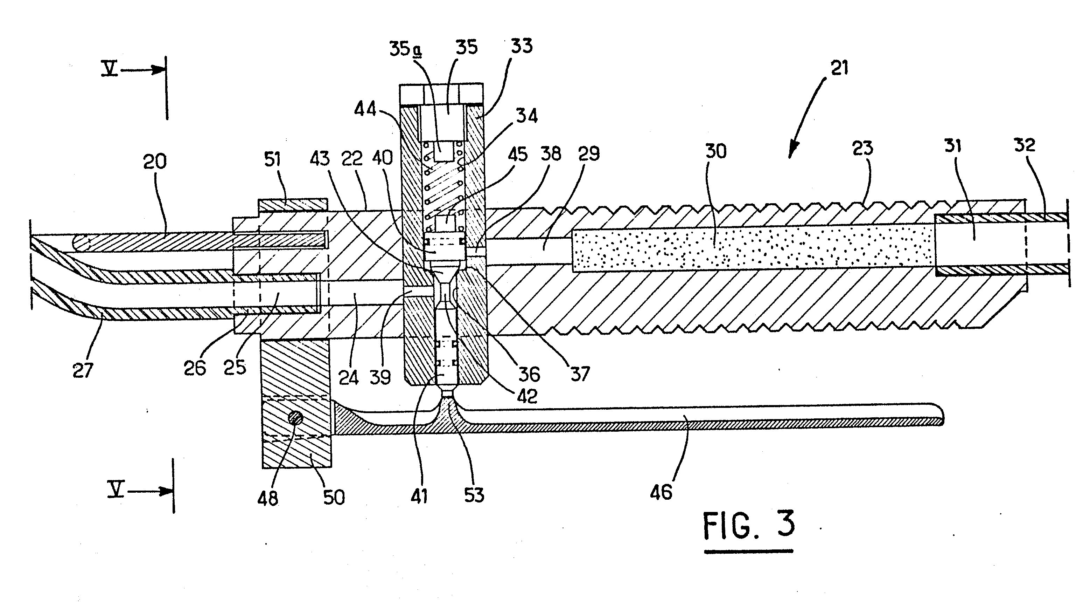

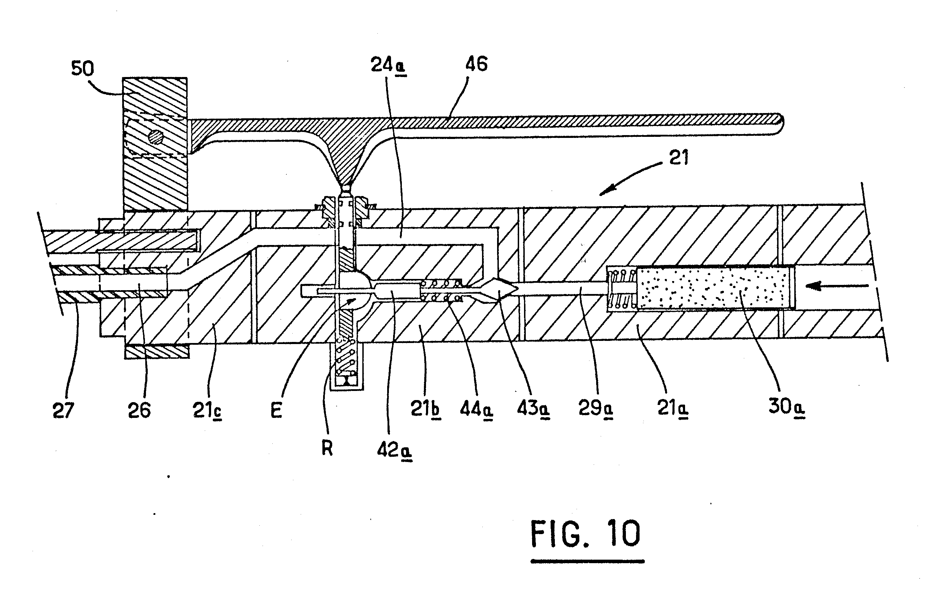

La figure 10, enfin, est une vue en coupe longitudinale du manche du rouleau, semblable à la figure 3, mais équipée d'une variante de réalisation de la soupape d'alimentation.

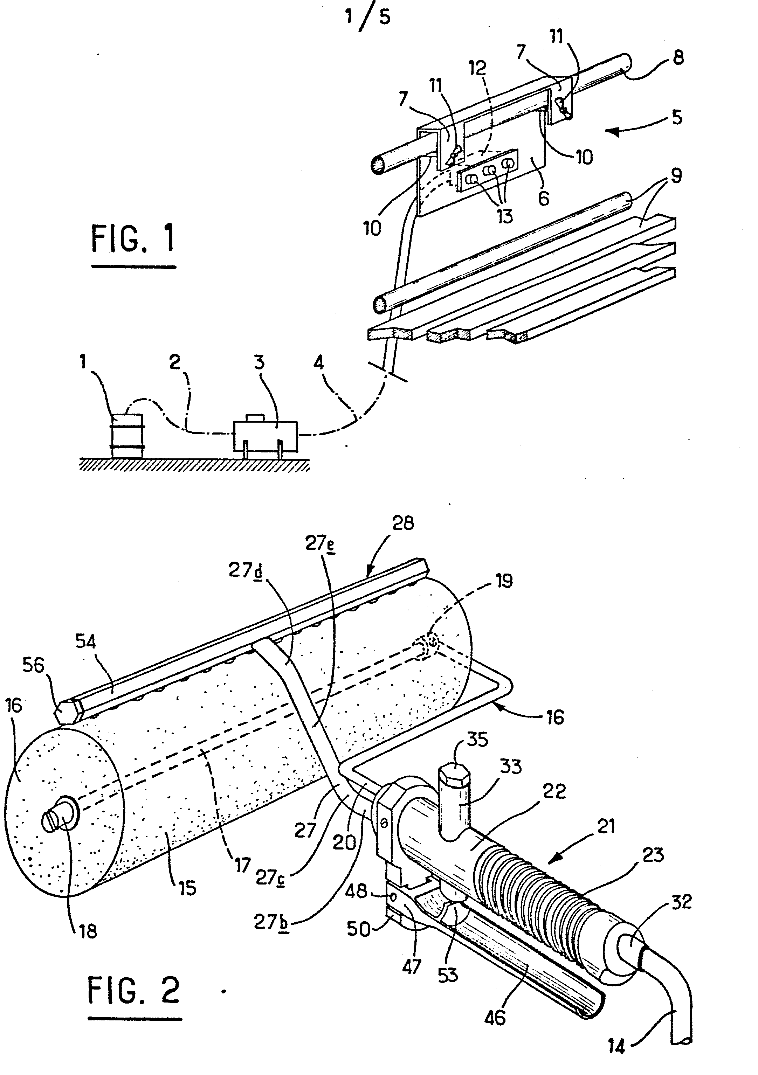

Sur la figure 1 on voit un récipient 1 de grande capacité, tel qu'un fût, rempli de peinture prête à être appliquée sur un mur à peindre, ledit récipient étant raccordé à un organe de pressurisation 3, telle qu'une pompe de pressurisation, par un tuyau d'aspiration souple 2. La peinture est aspirée dans le fût 1, reposant sur le sol, par la pompe 3, reposant également sur le sol ; elle est refoulée dans un tuyau souple d'alimentation générale 4 relié à un organe de distribution 5 constitué par une plaque en tôle 6, dont la partie supérieure est découpée et repliée de manière à réaliser deux parties d'extrémité en forme de U renversé 7, grâce auxquelles la plaque 6 peut être disposée à cheval sur une main courante ou sur un garde-fou 8 d'un échafaudage 9 dressé devant le mur à peindre. La plaque 6 est retenue sur la main-courante 8 par deux tiges 10 traversant  des perçages en regard l'un de l'autre dans les deux ailes des parties en U 7, lesdites tiges étant munies d'une extrémité filetée sur laquelle est serrée une vis-papillon 11. La plaque 6 supporte une boîte de distribution 12 présentant, d'une part, sur sa face opposée à l'échafaudage 9, un alésage dans lequel se fixe un raccord monté en bout du tuyau 4 et d'autre part, sur sa face tournée vers l'échafaudage 9, trois raccords 13 identiques, à vis ou de type auto-obturant, sur chacun desquels peut venir se monter un raccord complémentaire fixé sur une extrémité d'un tuyau souple de raccordement 14, dont l'autre extrémité est munie d'un raccord de liaison au rouleau décrit ci-après.

Le rouleau applicateur comprend un manchon 15 en une matière destinée à être imbibée de peinture, par exemple en laine ou en une mousse poreuse de matière plastique, cette matière étant choisie en fonction de la nature de la peinture appliquée. Le manchon 15 est porté par une monture 16 en acier inoxydable, qui comporte un arbre 17 autour duquel le manchon 15 peut tourner librement ; la position axiale du manchon 15 sur l'arbre 17 est définie par des arrêtoirs latéraux constitués, d'un côté par la rondelle d'appui d'un embout taraudé 18 vissé sur une extrémité de l'arbre 17 et, de l'autre côté, par une bague 19, montée sur l'arbre 17 et calée sur ce dernier par une vis de blocage radiale. Au-delà de la bague 19, l'arbre 17 se prolonge en étant coudé à angle droit sur une longueur légèrement supérieure au rayon du manchon 15 le plus épais que l'on puisse disposer sur la monture 16. Puis la monture 16 est à nouveau coudée à angle droit pour revenir parallèle à l'arbre 17, sensiblement jusqu'au milieu de la longueur de cet arbre.

A ce niveau, la monture 16 est contre-coudée à angle droit, et son extrémité 20, qui s'étend sensiblement perpendiculairement à l'arbre 17, est fixée, par exemple par emmanchement à force, collage ou vissage, dans l'extrémité tournée vers le manchon 15 du corps principal 22 en aluminium du manche 21, comme cela est clairement représenté sur la figure 3.

Le corps 22, de forme extérieure sensiblement cylindrique et dont la surface extérieure présente une partie rainurée 23 permettant une bonne prise en main, est percé parallèlement à son axe longitudinal d'un premier canal 24 débouchant dans la face d'extrémité du manche 21, qui est tournée vers le manchon 15, par l'intermédiaire d'un alésage 25 aménagé pour se raccorder de manière étanche à l'embout amont 26 d'une conduite rigide d'alimentation 27 d'une rampe d'arrosage 28.

La rampe 28 est rigidement reliée au manche 21 par cette conduite d'alimentation 27 rigide et coudée, comme visible sur les figures 2 et 9. La conduite 27 maintient la rampe 28 dans une position sensiblement parallèle à l'arbre 17 autour duquel tourne le manchon 15, et à une faible distance h (figure 9) au-dessus de ce dernier, dans une zone dans laquelle la rampe 28 ne risque pas de venir en contact avec le mur à peindre lorsque le rouleau est utilisé.

Par l'expression "au-dessus" (concernant la position de la rampe 28 par rapport au manchon 15), il faut comprendre, comme visible d'après la figure 2 et comme traduit sur le schéma de la figure 9, que la rampe 28 est située, angulairement, à environ 90° par rapport au plan P passant par l'axe géométrique du manchon 15 et parallèle ou passant par l'axe du manche 21 du rouleau. Autrement dit, l'angle A (figure 9) entre la droite joignant le centre du manchon 15 au centre de la section de la rampe 28, et la trace du plan P est d'environ 90°. De préférence, cet angle est supérieur à 90° et est compris entre 90° et 135°, c'est-à-dire que la rampe 28 se trouve alors dans la zone hachurée B.

Cette disposition de la rampe 28 permet de réduire au minimum les projections de peinture, lors de l'arrosage du manchon 15. En effet, le geste habituel de l'utilisateur d'un tel rouleau, lorsqu'il commande l'arrosage du manchon 15 en peinture, est de pousser ce manchon 15 contre la surface à peindre, ce qui provoque la rotation de ce manchon 15 dans le sens de la flèche F (figure 9) c'est-à-dire dans le sens contraire des aiguilles d'une montre quand on regarde cette figure 9 ou la figure 2.

La distance h (figure 9) de la rampe au-dessus du manchon est de préférence inférieure à 1 cm et notamment de l'ordre de 0,5 cm. Lorsque l'on remplace un manchon 15 par un manchon d'un diamètre différent, on peut régler cette distance en agissant sur la monture 16 du manchon 15. Par exemple, des moyens de réglage de la position de cette monture et donc de la position de l'arbre 17 peuvent être prévus ; on peut éventuellement déformer cette monture 16 pour obtenir la distance souhaitée. On peut également remplacer la monture 16 par une monture spécialement adaptée au nouveau manchon 15 que l'on veut mettre en place. Toutes ces modifications et adaptations sont effectuées uniquement au niveau de la monture 16, sans avoir à se préoccuper de la rampe 28 et de sa fixation.

Comme visible sur la figure 8, la rampe 28 comporte, dans sa région centrale, un trou borgne 28a dans lequel est engagé un prolongement 27a, notamment de diamètre plus faible, de la conduite 27. La rampe 28 est maintenue sur ce prolongement 27a par une ou plusieurs vis de pression telles que 28b. Le démontage de la rampe 28 et son remplacement par une rampe de longueur différente, propre à correspondre à un manchon 15 dont la longueur axiale serait différente, s'effectuent rapidement et simplement.

La conduite d'alimentation 27 comprend un premier tronçon rectiligne 27b sortant du manche 21, sensiblement parallèlement à l'axe de ce manche ; une première partie coudée 27c tournant sa concavité du côté opposé au manchon 15 et une deuxième partie coudée en sens inverse 27d, tournant sa concavité vers le manchon 15 ; une partie sensiblement rectiligne 27e relie les deux parties coudées 27c, 27d.

Le corps 22 est également percé parallèlement à son axe longitudinal d'un second canal 29, dans une partie élargie duquel est logé un filtre à peinture 30. Ce canal 29 débouche sur la face d'extrémité du manche 21 qui est opposée au manchon 15, par l'intermédiaire d'un alésage 31 aménagé pour se raccorder de manière étanche à l'embout aval 32 du tuyau de raccordement 14.

Les deux canaux 24 et 29, dont les axes sont parallèles mais décalés l'un par rapport à l'autre dans un plan diamétral du manche 21, débouchent tous deux dans un alésage diamétral d'axe vertical traversant le corps 22 de part en part ; dans cet alésage est monté un corps de soupape cylindrique 33 saillant du corps 22 du manche 21 au-dessus et au-dessous de ce dernier. La partie supérieure de ce corps de soupape 33 est percée axialement d'un alésage de grand diamètre 34, taraudé à son extrémité supérieure dans laquelle est vissé un bouchon 35 à tête de centrage 35a tournée vers l'intérieur. La partie inférieure du corps 33 est percée axialement d'un alésage de petit diamètre 36, qui débouche à l'extrémité inférieure du corps 33 et dans l'alésage de grand diamètre 34 auquel il se raccorde par un épaulement radial 37. Les alésages de grand et de petit diamètres 34 et 36 sont respectivement reliés aux canaux 29 et 24 par deux orifices respectivement d'entrée 38 et de sortie 39, de part et d'autre du siège de soupape que constitue la bordure interne de l'épaulement 37 ; avec ce siège de soupape coopère un obturateur de soupape disposé dans le logement interne du corps 33 défini par les deux alésages 34 et 36.

Cet obturateur comprend deux portées cylindriques d'extrémité 40 et 41, dont l'une 40 de grand diamètre est montée coulissante dans l'alésage 34, avec étanchéité grâce à un joint torique, et dont l'autre 41 de petit diamètre, est montée coulissante dans l'alésage 36, avec étanchéité grâce à deux joints toriques. Les deux extrémités de la portée cylindrique 41 sont tronconiques ; par son extrémité supérieure la portée cylindrique 41 est solidaire d'une tige centrale 42 qui la relie à la portée cylindrique 40 ; la portée 40 se raccorde également à la tige 42 par une portée conique 43. La portée 40 comporte, du côté opposé à la tige 42, une tête de centrage 45.

Un ressort de compression 44, comprimé entre le bouchon 35 et la portée cylindrique 40 et centré autour des têtes de centrage 35a et 45, repousse l'obturateur vers le bas sur la figure 3 et applique la portée conique 43 en butée contre le siège de soupape, l'orifice d'entrée 38 étant simultanément obturé par la surface latérale de la portée cylindrique 40. Le ressort 44 est logé dans une chambre isolée de la pression amont par une région de la portée cylindrique 40 et par le joint torique d'étanchéité prévu sur cette portée.

Cette position de repos ou de fermeture de la soupape ainsi disposée entre les canaux 29 et 24, qui constituent respectivement les parties amont et aval de la canalisation d'alimentation logée dans le manche 21, correspond à une interruption de l'alimentation de la rampe 28 à partir de la source sous pression.

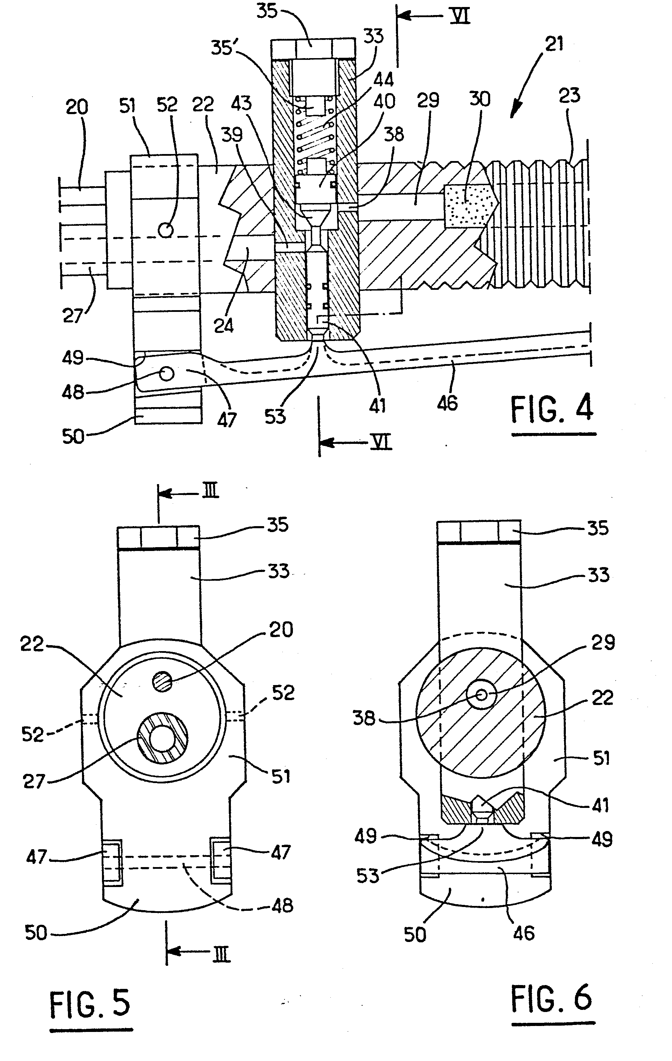

Pour passer de cette position à la position d'alimentation, il suffit de déplacer l'obturateur dans son logement à l'encontre du ressort 44, en écartant la portée conique 43 de son siège et en soulevant la portée cylindrique 40, ce qui dégage l'orifice d'entrée 38 et assure la mise en communication du canal 29 avec le canal 24 ; l'orifice de sortie 39 n'est pas obturé par la portée cylindrique 41, comme cela est bien visible sur la figure 4.

Cet actionnement de l'obturation de soupape est assuré par la manoeuvre d'une poignée de commande 46, montée pivotante par deux pattes latérales avant 47 autour d'un axe 48 parallèle à l'arbre 17 ; l'axe 48 est disposé dans les dégagements latéraux 49 de la partie inférieure 50 d'un support de poignée 51 présentant une ouverture circulaire dans laquelle est engagée l'extrémité du manche 21, qui est tournée vers le manchon 15 ; le support 51 est fixé sur le manche 21 par deux vis de blocage 52 diamétralement opposées.

Un ergot 53 de la poignée de commande 46 vient au contact de l'extrémité inférieure de la portée cylindrique 41, et les pivotements de la poignée 46 sous le manche 21 et en direction de ce dernier sont limités par le profil des dégagements latéraux 49 de la partie inférieure 50 du support de poignée 51 ; en position de repos, la poignée 46 occupe la position représentée sur la figure 3, qui correspond à la position de fermeture de la soupape ; en position de pivotement maximum vers le manche 21, la poignée 46 occupe la position représentée sur la figure 4, dans laquelle l'ergot 53 a soulevé l'obturateur de soupape pour alimenter la rampe d'arrosage 28.

En se reportant à la figure 10, on peut voir une variante de réalisation de la soupape de commande de l'arrivée de peinture. Les éléments de cette variante identiques ou jouant des rôles analogues à des éléments déjà décrits précédemment sont désignés par les mêmes références numériques, éventuellement suivies de la lettre a. Leur description n'est pas reprise ou n'est reprise que très succinctement.

Selon cette variante, le pointeau 43a, qui étrangle la veine de peinture sous pression qui s'écoule vers le manchon, est disposé parallèlement à l'axe du manche 21 du rouleau. Ce manche 21 est réalisé en trois parties 21a, 21b 21c assemblées les unes aux autres de manière démontable. Les déplacements longitudinaux du pointeau 43a pour commander la fermeture ou l'ouverture de la communication entre le canal amont 29a et le canal aval 24a, sont obtenus à partir de déplacements transversaux, commandés par la poignée de commande 46, à l'aide d'un moyen pour transformer ces mouvements transversaux en mouvements longitudinaux. Ce moyen de transformation des mouvements transversaux en mouvements longitudinaux peut comprendre une sorte d'étrier E en arc de courbe, sensiblement en arc de cercle, qui est en appui contre une extrémité d'une partie renflée de la tige 42a du pointeau 43a comme visible sur la figure 10. L'axe du pointeau est situé dans le plan moyen de l'étrier E qui comprend deux arcs de cercle entre lesquels est engagé un prolongement de diamètre réduit de la tige 42a. Un déplacement des arcs de cercle formant l'étrier E transversalement par rapport à l'axe du pointeau 43a permet à ce dernier, sous l'action du ressort de rappel 44a, de se déplacer, suivant son axe, en assurant l'ouverture de la communication entre les canaux 29a et 24a. Un ressort de rappel R repousse l'étrier E et le levier 46 dans la position de repos pour laquelle le pointeau 43a ferme toute communication entre les canaux 29a et 24a.

La rampe 28 s'étend sur pratiquement toute la longueur du manchon 15 et, comme cela est représenté sur les figures 7 et 8, elle est constituée par un organe tubulaire rectiligne 54, notamment de section hexagonale, présentant un passage axial 55 obturé par un bouchon 56 à une extrémité. L'autre extrémité du passage axial 55 peut être borgne comme représenté sur la figure 7, ou déboucher à l'extérieur et être fermée par un bouchon semblable au bouchon 56. Ce passage 55 est en communication, dans sa partie centrale, avec la conduite d'alimentation 27 qui est solidarisée avec l'organe tubulaire 54 par l'embout 27a reçu dans le perçage 28a ménagé dans le milieu d'une face plane de l'organe 54. Selon la représentation de la figure 7, l'organe 54 constitue un support pour seize gicleurs 57 régulièrement répartis le long de l'organe 54 en deux groupes de huit de part et d'autre de la conduite d'alimentation 27, et alignés sur la face plane de l'organe 54 qui est tournée vers le manchon 15. La longueur L de la rampe 28, représentée sur la figure 7 et équipée de seize gicleurs est d'environ 175 mm. On a constaté qu'il est avantageux de prévoir une distance d entre l'axe de la conduite 27 au niveau de la rampe 28 et le centre du premier gicleur situé de part et d'autre de la conduite 27 au moins égale à 7 mm et de préférence supérieure à 8 mm pour éviter un débit trop important de peinture par ce premier gicleur ; dans ces conditions, pour une longueur L d'environ 175 mm, il est préférable de prévoir seulement sept gicleurs 57 de part et d'autre de l'axe de la conduite 27.

Chacun des gicleurs 57 est monté de manière démontable dans la rampe 28, notamment par vissage dans un alésage radial taraudé 58 qui débouche dans le passage axial 55 et constitue l'alésage d'alimentation du gicleur.

De préférence, plusieurs jeux de gicleurs présentant des passages calibrés de diamètre différent peuvent être montés sur la rampe 28 en fonction de la nature du revêtement à appliquer. Ces gicleurs 57 peuvent être réalisés en matière plastique.

Un choix judicieux des matériaux constitutifs des différents éléments du rouleau ainsi équipé permet de limiter la masse de ce dernier à environ 1 kg.

En configuration d'utilisation, le rouleau est, en partie, soutenu et rééquilibré, en dépit de la position en porte à faux de la rampe 28 du manchon 15 et de la monture 16 par rapport au manche 21, par un effet de balancier dû au tuyau de raccordement 14 qui est rempli de peinture sous une pression élevée. Cette pression peut atteindre plusieurs centaines de bars, notamment de 350 bars à 400 bars. Le tuyau de raccordement 14 se raidit donc, ce qui soulage d'autant l'utilisateur.

Grâce aux pertes de charge au passage dans le manche 21 et surtout dans la soupape d'alimentation, la pression qui règne en aval pour l'alimentation de la rampe 28 est ramenée à une valeur relative convenable de l'ordre de 1 bar pour les peintures liquides fluides, cette pression pouvant être de l'ordre de 10 bars pour des produits plus visqueux, notamment des enduits.

REVENDICATIONS

1. Rouleau applicateur, destiné à l'application sur une surface, d'un liquide telle qu'une peinture, ledit rouleau comprenant : un manchon libre en rotation autour de l'arbre d'une monture; un manche relié à l'arbre et s'étendant sensiblement perpendiculairement à celui-ci ; une rampe d'arrosage du manchon disposée sensiblement parallèlement à l'arbre et s'étendant sensiblement sur toute la longueur du manchon, à une faible distance en regard de ce dernier, la rampe d'arrosage étant alimentée en liquide sous pression, à partir d'une source d'alimentation en liquide pressurisé, par un tuyau de raccordement, une canalisation d'alimentation portée par le manche, canalisation dans laquelle est montée une soupape d'alimentation, et une conduite d'alimentation, caractérisé par le fait que la conduite d'alimentation (27) est rigide et coudée, et maintient la rampe (28) à une faible distance au-dessus du manchon (15), cette conduite (27) étant solidarisée, d'une part, avec le manche (21) et, d'autre part, avec la rampe d'arrosage (28).

2. Rouleau selon la revendication 1, caractérisé par le fait que la rampe (28) est située angulairement à environ 90° par rapport au plan (P) passant par l'axe du manchon (15) et parallèle ou passant par l'axe du manche (21) du rouleau, la rampe (28) étant de préférence située dans une zone angulaire (B) comprise entre environ 90° et 135° par rapport à une direction partant du centre du manchon (15) et dirigée vers le manche (21) du rouleau.

3. Rouleau selon la revendication 1 ou 2, caractérisé par le fait que la soupape d'alimentation (33, 40, 41, 43,44) comprend un corps de soupape (33) porté par le manche (21), cette soupape étant actionnée par une poignée (46) articulée sur le manche (21).

4. Rouleau selon l'une quelconque des revendications 1 à 3, caractérisé par le fait que la soupape d'alimentation comprend un obturateur (40, 43, 42, 41) monté coulissant dans un corps de soupape (33) porté par le manche (21), ledit obturateur étant appliqué contre un siège (37) du corps de soupape (33) par des moyens élastiques (44), à l'encontre desquels l'obturateur (40, 43, 42, 41) est soulevé de son siège (37) et déplacé lorsque l'utilisateur commande le pivotement de la poignée (46) par rapport au manche (21).

5. Rouleau selon la revendication 4, caractérisé par le fait que la canalisation d'alimentation comprend une partie amont (29) et une partie aval (24) par lesquelles cette canalisation est respectivement raccordée à la source d'alimentation (1, 2, 3) et à la conduite d'alimentation (27) de la rampe (28), ces deux parties (29, 24) débouchant toutes deux dans un passage transversal du manche (21) dans lequel est logé le corps de soupape (33) ledit corps présentant un orifice d'entrée (38) et un orifice de sortie (39), qui débouchent, de part et d'autre du siège (37) du corps de soupape (33) dans un logement interne à ce dernier dans lequel est monté l'obturateur (40, 43, 42, 41), lesdits orifices d'entrée (38) et de sortie (39) mettant le logement en communication respectivement avec les parties amont (29) et aval (24) de la canalisation d'alimentation.

6. Rouleau selon la revendication 5, caractérisé par le fait que l'obturateur comprend deux portées d'extrémité cylindriques (40, 41), de section circulaire et de diamètre différent montées chacune coulissante avec étanchéité dans l'un de deux alésages de diamètre correspondant (34, 36) débouchant l'un dans l'autre et délimitant le logement interne du corps de soupape (33),la portée cylindrique de plus grand diamètre (40) étant raccordée à une tige centrale (42) qui la relie à l'autre portée cylindrique (41), grâce à une portée conique (43) qui, en position d'interruption de l'alimentation par l'obturateur, est appliquée contre le siège de soupape, délimité sur l'épaulement (37) selon lequel se raccordent les deux alésages (34, 36), par un ressort (44) prenant appui, d'une part, sur la portée cylindrique de plus grand diamètre (40) et, d'autre part, contre un bouchon (35) de fermeture de l'alésage de plus grand diamètre (34), tandis que la portée de plus grand diamètre (40) obture l'orifice d'entrée (38) du corps (33), le pivotement de la poignée (46) en position d'alimentation provoquant le coulissement de la portée cylindrique de plus petit diamètre (41) en direction de l'épaulement (37) afin de soulever la portée conique (43) du siège de soupape et de dégager l'orifice d'entrée (38), l'orifice de sortie (39) restant toujours dégagé.

7. Rouleau selon l'une des revendications 5 ou 6, caractérisé par le fait que les parties aval (24) et amont (29) de la canalisation d'alimentation s'étendent entièrement dans le manche (21) et débouchent dans les faces d'extrémité du manche (21) respectivement tournée vers le manchon (15) et opposée au manchon (15) par l'intermédiaire d'alésages (25, 31) destinés à recevoir des raccords (26, 32) qui les relient respectivement à la conduite d'alimentation (27) de la rampe (28) et au tuyau de raccordement (14) du rouleau.

8. Roulean selon l'une quelconque des revendications précédentes caractérisé par le fait que la rampe d'arrosage (28) comporte des gicleurs (57) interchangeables.

9. Rouleau selon la revendication 8 caractérisé par le fait que la conduite d'alimentation (27) arrive dans la partie centrale de la rampe (28) et que le centre du premier gicleur (57) situé de part et d'autre de l'axe de la conduite d'alimentation (27) au niveau de son raccordement avec la rampe se trouve à une distance (d) d'au moins 7 mm de cet axe.

10. Rouleau selon l'une quelconque des revendications précédentes caractérisé par le fait que la poignée de commande (46) est montée pivotante par deux pattes latérales avant (47) autour d'un axe (48) parallèle à l'arbre (17) autour duquel le manchon (15) peut tourner.

11. Rouleau selon l'une quelconque des revendications précédentes caractérisé par le fait que grâce aux pertes de charge au passage dans le manche (21) et dans la soupape d'alimentation (33, 41, 40, 43, 44), la pression qui règne en aval, pour l'alimentation de la rampe (28) est ramenée à une valeur relative convenable inférieure à 10 bars, la pression en amont étant de plusieurs centaines de bars.

12. Ensemble destiné à l'application d'un liquide sur une surface, comprenant au moins un rouleau applicateur selon l'une quelconque des revendications précédentes, caractérisé par le fait qu'il comprend au moins un organe de distribution (5), auquel au moins deux rouleaux applicateurs sont destinés à être raccordés par leur tuyau de raccordement respectif (14) et au moins un tuyau d'alimentation générale (4) destiné à raccorder l'organe de distribution (5) à l'organe de pressurisation.

FIG. 1

FIG. 2

FIG. 3

0122832

FIG. 4

FIG. 5

FIG. 6

VIII

27

28

L

55

57

d

56

VIII

54

**FIG. 7**

28

27a

27

28b

57

54

58

55

28a

**FIG. 8**

A

27d

27

B

28

90°

27e

h

21

F

15

17

16

P

27c

27b

**FIG. 9**

4/5

0122832

FIG. 10

**0122832**
Numéro de la demande

**RAPPORT DE RECHERCHE EUROPEENNE**

Office européen
des brevets

EP 84 40 0529

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | CH-B- 427 587 (ROWEX S.A., PULLY)<br>* En entier * | 1-3 | B 05 C 17/02<br>F 16 K 21/04 |
| A | | 4,7-10 ,12 | |
| Y | FR-A-1 092 653 (A. ROCHE)<br>* En entier * | 1-3 | |
| A | FR-A-2 198 422 (FA. ALOIS SCHLACHTER)<br><br>* En entier * | 1-4,7, 8,10, 12 | |
| A | DE-A-2 339 331 (BEYER PAUL)<br>* En entier * | 3-7 | DOMAINES TECHNIQUES RECHERCHES (Int. Cl. 3) |
| A | US-A-4 316 600 (PARISE et al.)<br>* En entier * | 3-7,10 | B 05 C<br>F 16 K |
| A | US-A-3 331 093 (F.E. MAYDEN)<br>* Figure 1 * | 12 | |
| A | FR-A-1 309 040 (H. VERGNE)<br>* Figures 1,3,4 * | 1,2 | |
| A | US-A-4 222 678 (MILLER)<br>* Figures 1,3,4,8 * | 1 | |

Le présent rapport de recherche a été établi pour toutes les revendications

| Lieu de la recherche | Date d'achèvement de la recherche | Examinateur |
|---|---|---|
| LA HAYE | 25-06-1984 | DE LA MORINERIE B.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03. 82